# EUROPEAN PATENT SPECIFICATION

(11) **EP 2 353 397 B1**
(45) Date of publication and mention of the grant of the patent: **24.07.2013**
(21) Application number: 10152439.5
(22) Date of filing: 02.02.2010
(51) Int. Cl.: A23B 4/18, A23B 4/26, B65B 25/06, B65B 31/00, A23B 4/06

(54) **Method for packaging food and a food package**
Verfahren zum Verpacken von Lebensmitteln und Lebensmittelverpackung
Procédé d'emballage d'aliments et emballage d'aliments

(43) Date of publication of application: 10.08.2011
(73) Proprietor: TL Seafood AB, 463 30 Lilla Edet (SE)
(72) Inventor: Linchausen, Tore, 461 79 Upphärad (SE)
(74) Representative: Bergentall, Annika Maria

(56) References cited:
- EP-A1- 1 958 513
- WO-A1-2009/136662
- WO-A2-03/013279
- DE-A1- 4 422 832
- NL-C2- 1 017 062
- US-A- 2 480 082
- US-A- 3 759 722

## Description

### TECHNICAL FIELD

The present invention relates to a method for packaging a food product and to a food package wherein the product is packaged in a fluid containing a preservative substance, for example a brine, a liquor or similar. Particularly the invention relates to packaging of seafood, but also other products, preferably, but not necessarily, food products.

### STATE OF THE ART

The requirements for packaging of food products are high, first as far as growth of bacteria is concerned, but also as far as the consistency, the smell and the appearance are concerned. It is known to store for example different kinds of seafood, such as shrimps, crustaceans etc in different kinds of freeze packages. A drawback of preserving in freeze packages is that the product after thawing is not experienced as fresh and with the time, the product looses its taste and it also looses weight. It is thereby possible to store packages with product in a frozen condition in two to three years after the seafood has been caught.

Another preserving process consists in storing for example shrimps or similar in a so called brine or a liquor which is a solution with a preserving effect, and which for example contains water, salt, acetic acid, a food preservative (sodium benzoate) and depending on what is desired, flavourings and similar. Products which are stored in a solution, such as a brine or a liquor, are normally stored in different kinds of plastic containers or glass jars. A disadvantage associated with storing in brine or in a liquor is that large amounts of brine are needed and at packaging in known plastic containers, a considerable part of the weight or the volume respectively consists of the brine itself, which is not the specific product, for example seafood, that it is desired to store. This also leads to higher requirements as to the size of the package, which also has to be adapted to both product and the amount of brine, which results in that a lot of packing or packaging material is needed. This in turn has as a consequence that the costs for transportation will be high, transport capability requirements will be unnecessarily high since only a little part of the content of the package actually consists of the product desired by the costumer.

A further disadvantage is that large quantities of food preservatives are needed which after opening of the package are simply flushed down the sewage disposal systems. Still another disadvantage is that weight and volume of a package purchased by a costumer, that may be a large scale kitchen or a private costumer, a costumer in a store, will be heavy and bulky in relation to the actually desired product. DE 4422832 A1 discloses storing live mussels for up to 24 nows in brine before packaging

Many food products, such as for example seafood, have to be transported from far away after the product has been packaged, which has a negative impact on the environment, particularly in the situation of today when it has been realized that it becomes more and more important to be able to reduce the amount of transportations, the amounts of packaging material, which load the environment, as well as also the production of packaging material, and the destruction of consumed products. For the producer also unnecessarily high costs are involved, packaging costs as well as transportation costs.

Known packaging methods and packages respectively are associated with different disadvantages; as far as packages in a solution are concerned, large amounts of packaging material, and large amounts of preserving solution are reqired which results in unnecessarily high fabrication costs and transportation costs. Packages with a frozen product are certainly less space demanding and require less packaging material and may also be transported at a lower cost, but the taste and the appearance of the product will suffer and may therefore be less attractive for the end consumer.

### SUMMARY OF THE INVENTION

It is thus an object of the present invention to provide an improved method for packaging of food products and similar, particularly seafood. It is also an object of the invention to provide an improved package for food products. Particularly it is an object of the invention to provide a method for packaging of seafood or other food products in brine or a liquor through which less packaging material is required, and through which the package can be made smaller as well as have a lower weight and be more easy to handle than heavy, known packages containing the same amount of product, and through which furthermore the required transport volume can be reduced such that transportation costs can be reduced.

A further object of the invention is to provide a method through which food can be packaged in a safe manners as far as relevant requirements as to bacteria levels and similar are conserned and such that a high quality can be maintained in this respect and also as far as taste and smell are concerned. It is also an object to provide a package which is easy to handle, easy to transport and which has an aesthetical appearance, preferably with a product which is visible to the costumer.

It is also an object to provide a method for packaging a food through which the food product is affected to the lowest possible extent, both as far as taste and appearance, form and consistency are concerned. Still a further object is to provide a method which is easy to carry out at low costs.

It is also an object of the invention to provide a package through which one or more of the above mentioned objects can be achieved.

Therefore a method for packaging a food product in a solution containing a food preserving substance, for example a brine or a liquor, is provided which has the features of the characterizing part of claim 1.

A package obtained through the method of claim 1, or additionally through the in the dependent claims contained features concerning any of the preferable embodiments, is also provided. Still further a package having the characterizing features of claim 14 is provided.

### BRIEF DESCRIPTION OF THE DRAWINGS

The invention will in the following be further described, in a non-limiting manner, and with reference to the accompanying drawings, in which:
- Fig. 1: shows a schematical flow diagram describing the procedure according to a first embodiment,
- Fig. 2: shows a flow diagram for carrying out the procedure according to a second embodiment,
- Fig. 3: is a schematical wiev of a packaging site for carrying out of the procedure and which comprises a number of stations according to a first embodiment,
- Fig. 4A: shows an example of a pressing and sealing station in a first operating position for removal of air from, and sealing of, a package,
- Fig. 4B: shows the pressing and sealing station in a second operating position,
- Fig. 5A: is a very schematical side view of a package with seafood according to one embodiment, and
- Fig. 5B: is a very schematical example of a package according to a second embodiment.

### DETAILED DESCRIPTION

In a preferred embodiment the food product comprises seafood, which after being caught is frozen, transported to a site for peeling, where it is preferably peeled by hand, but the inventive concept is of course also applicable to shellfood peeled by machine, such as shrimps, but also to products which do not need to be peeled.

Then the food product to be packaged is provided to a preserving solution, or vice versa, the solution is provided to the product, wherein the amount of preserving solution is such that the food product as least is covered by the solution, 100. It is thus possible to feed the food product to a container with a preserving solution or alternatively to feed the preserving solution to a container with a food product. The preserving solution preferably contains water (or in some cases oil) to which one or more preserving substances, which are known per se, have been added. According to one embodiment the solution consists of water, preservative substance citric acid, sodium benzoate, potassium sorbate, and salt. Other or additional substances can be added for reasons of flavour, consistency or appearance.

According to a particular embodiment, for 400 liters of brine, about 15.8 kilogram preservative of the above mentioned kind is used and 24 kilogram of salt. These figures are of course approximate and the proportions can deviate; for example 10-20 (14-18) kilograms of food preservative for the same amount of brine and possibly 15-30 kilograms of salt. Particularly 0.5-0.75 liters of brine are used per kilogram of peeled shrimps, even more particularly 0.7 liters of brine.

Then the food product is pre-stored in the food preserving solution, for at least three days, in a pre-storing stage, 101. In some cases the pre-storing period may be somewhat shorter than three days, but it has been realized that, in order to prevent bacterial growth, and to provide a product which in all required respects are free from bacteria, and which has a consistency and an appearance that is appealing, the time should be about three days. The pre-storing stage may of course also be longer, but for economical reasons, as well as for reasons as far as appearance, flavour etc of the product are concerned, the time period should not be too long, but normally be between three and six or seven days, but preferably three to five days.

Then the food product is separated from the food preserving soulution, for example by means of sieving, 102. The main part of the solution is removed by means of sieving, and a desired amount of food product is placed in a plastic bag, 103. The desired amount is determined, according to one advantageous embodiment in that the amount of product is weighed. Other procedures are of course also possible, for example determination of the volume or similar. Thereafter a smaller amount of food preserving solution, preferably of the same kind as the food preserving solution used in the pre-storing step, is added to the food product, which had been separated from the solution, in the bag, 104. It is important that the bag contains the desired amount of food product and a small amount of food preserving solution.

In an advantageous embodiment the amount solution after adding is about 140-200 ml, preferably 150-190 ml, more particularly about 170 milliliter solution per kilogram food product. This amount may of course vary, the essential thing being that it is a considerably smaller amount than the amount used in the pre-storing step, and furthermore that the amount is considerably smaller than the amount of food product.

Thereafter air is removed from the bag, for example by means of pressing, which shall be non-destructive, such that the appearance and the form of the food product is not negatively influenced. The air can alternatively, or in addition thereto, be removed by partial evacuation or so called soft-vacuumation, 105. It is also possible to add a so called food preservative gas to remove oxygen. Thereafter, or in connection with the removal of air, the bag opening is welded together or sealed in any appropriate manner, 106.

Thereafter the bag can be easily transported to any desired destination, for example stores, supermarkets etc. Compared to known packages, for example for shell fish packaged in brine or a solution, according to a preferred embodiment, the amount of packaging material can be reduced with about 85%. Also the usage of brine or solution can be reduced with up to 75%. The amount can be even further reduced if the food preserving solution that is used in the pre-storing step is reused in the storing step, which is possible. Alternatively new preserving solution can be added to the bags. Essential is that the amount of solution that needs to be transported to the final user is considerably reduced and this is a clear advantage since such solution in any case, at the end station, is simply poured out and is not used. Through the method the transportation costs can be reduced considerably. Since also the amount of food preserving solution can be reduced, the discharges of preservatives to the environment are reduced, which also is an important advantage. In addition thereto the packages are much easier to handle and to carry than known packages for a food product in brine.

It would of course be possible to simply separate to the food product from the major part of the food preserving solution and to keep a smaller, remaining part for direct packaging. The problem is than that is it not possible to exactly weigh up the amount of food product to be packaged. This could be solved by keeping knowledge of the amount of added food product and the amount of added food preserving solution in the pre-storing step. Alternatives are possible in this respect.

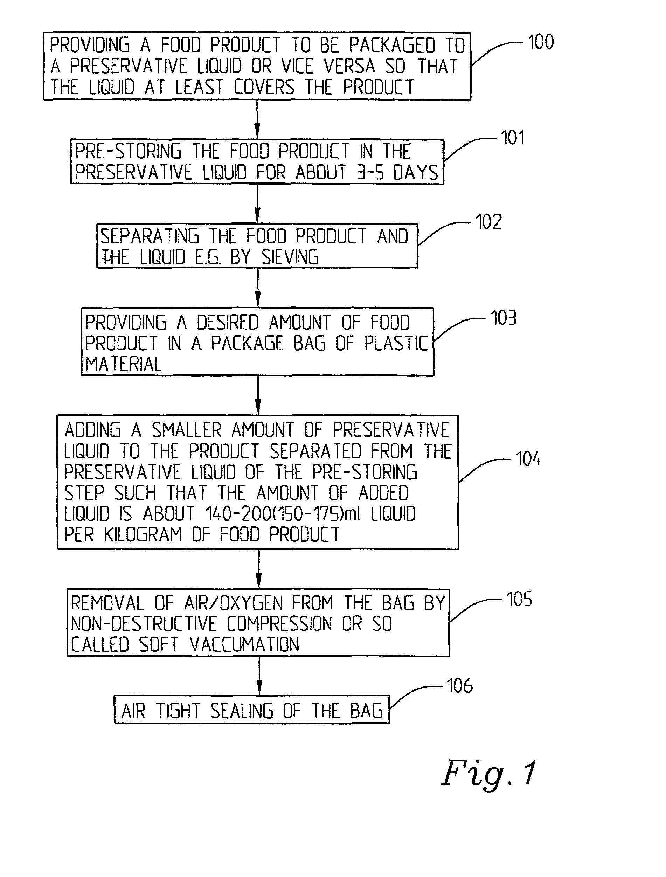

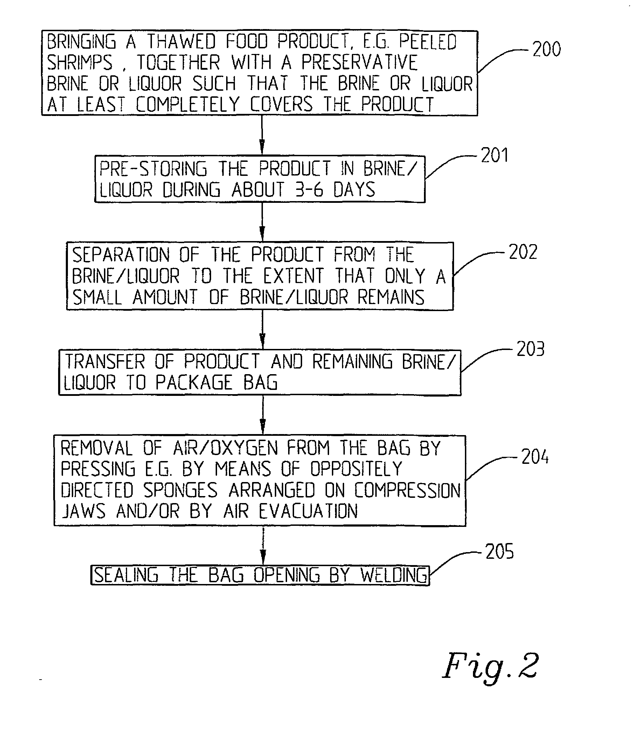

Fig. 2 is a flow diagram schematically illustrating a particular embodiment. In this embodiment a frozen food product, for example seafood such as shrimps or similar, and a food preserving brine or liquor are brought together such that the amount of brine or liquor at least covers the food product, (cf. description above of the procedure according to Fig. 1), 200. Then the food product is pre-stored during three to five or six days in the preserving solution or the brine as also described above, 201. The food product is then separated from the preserving brine or liquor to the extent that only a smaller part of the preserving brine or liquor remains, which presupposes that in some other manner knowledge as been gained about the amount of food product or that it is not necessary to have exact information theron, since only a smaller part of the solution is kept, or similar, 202.

Then the desired amount of food product, with the smaller part of the preserving brine or liquor, is transferred to storing bags, 203. Air (oxygen) is removed from the bag by pressing, for example by means of sponges arranged on compressive jaws, or via partial air evacuation, 204. It should be noted that it is a only required that a so called soft-vacuum is obtained, for example that a so called 10% vacuum level is obtained, which should be compared with, for a conventional vacuum or freezed product, a vacuum level of 80-90%.

Then the bag is sealed for example by welding, 205. It should be noted that the bag can be of different kinds, an ordinarly conventional bag, a standing pouch, a bag with a so called zip-closure and it can have many different dimensions. It can be bags either for delivery to industrial large kitchens but it can also be smaller bags for delivery directly to a private end consumer. According to alternative embodiments the method may of course include obtaining of a higher vacuum level, for example 20-30% or more, but not up to 70-80% vacuum level or more.

The pressing step with sponges arranged on jaws is of course applicable independently of how separation has taken place in earlier steps.

In an advantageous embodiment for example peeled shrimps or similar are stored in bags wherein the relationship between the amount of shrimps and the amount of brine is 250 milliliter brine for 1.5 kilograms of shrimps or 4 kilograms of shrimps in 750 milliliters of brine. Not shown steps in the flow diagram may involve, for packaging of an earlier frozen product, preceding thawing thereof, then peeling and washing before it is put in the preserving solution in the pre-storing step etc.

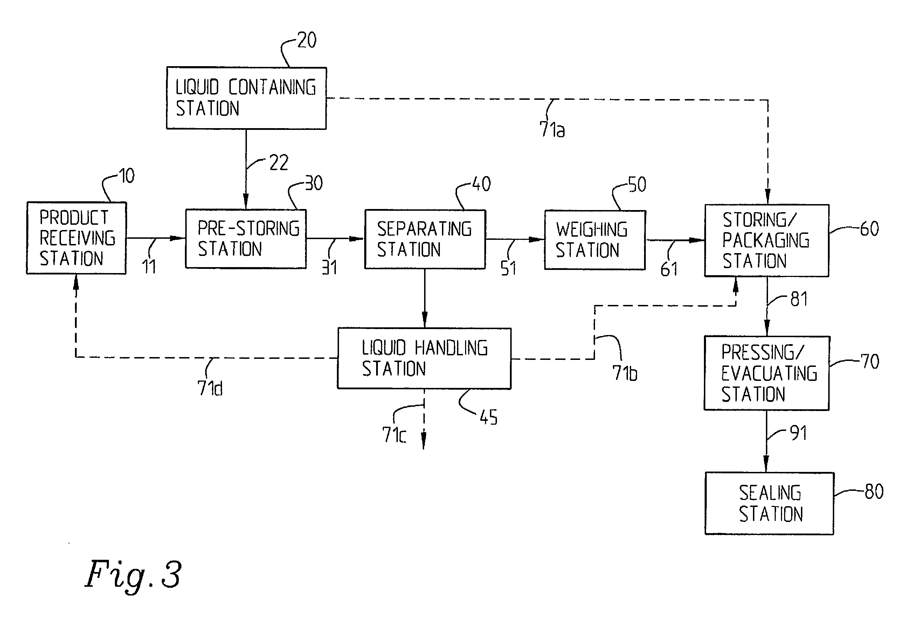

Fig. 3 is a schematical block diagram illustrating a site for packaging of food products, such as for example a thawed product. It should however be clear that it can also be for example a fresh product or a product processed in some other manner.

In Fig. 3 is illustrated a receiving station 10 for reception of for example a thawed food product. The station may be preceded by, or contain, or be followed by, a washing station, but the invention is not limited thereto.

Thereafter the food product is transferred, 11, to a pre-storing station 30, where it is brought together with a preserving solution which is fetched, 22, from a container station 20 for a preserving liquid. Alternatively the pre-storing station and the container station may comprise one and the same station. In the pre-storing station 30 the product is stored in the preserving solution at least for a given time period which is about three days but which preferably does not exceed five or six days. Then the product in preserving liquid is transferred, 31, to a separating station 40 which in some embodiments also can be seen as forming part of the pre-storing station or comprise fetching means for removal of the food product, whereby the preserving liquid for example is sieved off, the product is lifted out, or similar.

The liquid solution that was used in the prestoring step for an amount of product can thereafter directly be dispatched or alternatively be conducted, 41, to a liquid handling station 45 and from there be dispatched, 71c, part of it or all of it. According to a particular embodiment the solution used in the pre-storing station is reused for a pre-storing purpose (71d) and/or for final storage. It is thus also possible to transfer solution to the final storing station 60 from the liquid handling station 45 (71b) or to the liquid containing station 20 (71a). In this embodiment, the product, from which the solution has been sieved off, is weighed in a weighing station 50, whereupon a desired amount of the product is transferred to the storing and packaging station 60. In the storing and packaging station 60 the preserving solution can be added from a separate liquid containing station 20 (71a) or alternatively from a liquid storing station 45 (71b) or from both. Of course it is also possible to add a somewhat different preserving solution from some other source.

Thereupon, 81, air is removed from the bag, for example in a pressing station 80 wherein non-destructive pressing can be applied in different manners, for example by means of sponges mounted on jaws which are brought in contact with the bag, drawn across it and towards its sealing edge, and which are located above and below the bag or on opposite sides thereof in order to press the air out through the bag opening with a pressure which is such that the product is not deformed. Advantageously in association with this station (corresponding step), or for example in a sealing station 8, the bag which contains a desired amount of product and a small amount of solution is sealed and, for example by means of welding. After optional attachement of a marking of the product or similar the packaged product is ready for further transportation to the end consumer.

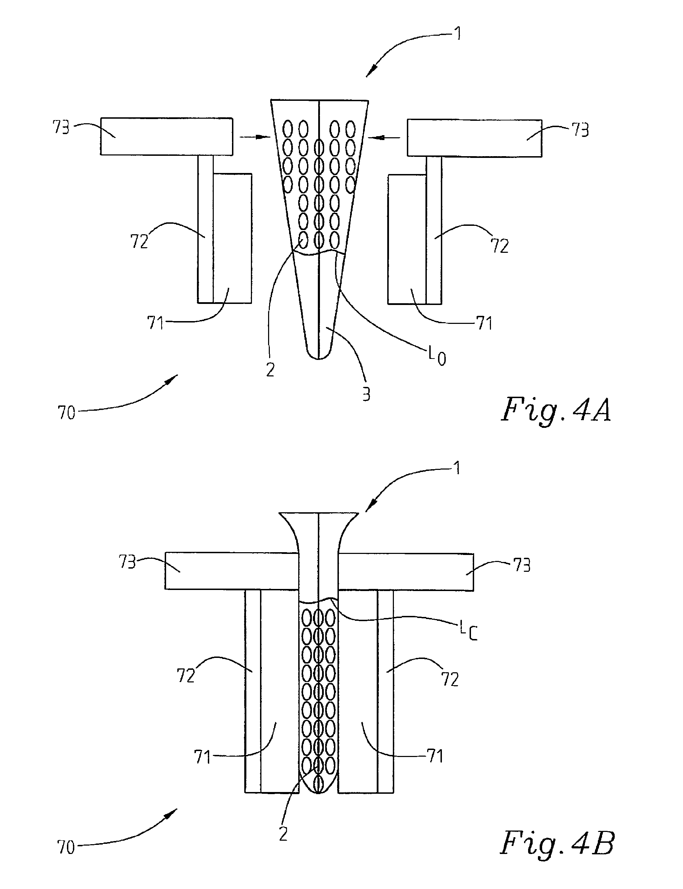

Figures 4A, 4B are schematical views of embodiments of a pressing station 70 in an open position (Fig. 4A), and in an active position (Fig. 4B). Sponges 71 are arranged by means of mounting means 72 on sealing jaws 73 which under a certain, limited pressure are drawn along the bag so that it will be compressed. Jaws on for example either sides of a bag convenyor are exposed to a certain pressure, the sponges get in contact with the bag containing the product and the liquid. Since the bag is open, air is pressed out and the liquid pillar inside the bag is rising. The bag can now be sealed by means of sealing jaws.

Particularly Fig. 4A schematically shows a flexible bag of plastic 1A containing a product 2 and a preserving liquid 3 at a pressing and sealing station 70 in a first inactive position wherein the liquid level is denoted L₀. Holding means for the bag are not shown, since such means can be arranged in many different manners. The machine is also not shown in its entirety since the machine also can be arranged in many different ways. The essential for the invention is that, for example as in this embodiment, sponges 71, 71 are arranged on opposite sides of the bag 1 for exertion of a pressure on the bag. By means of mounting means 72, 72 sponges 71, 71 are flexibly attached to the sealing jaws 73, 73.

In Fig. 4B a second position is schematically shown, wherein the bag 1 by means of the sponges 71, 71 is pressed together so that the liquid pillar will rise to a position L_{c}. The sponges 71, 71 compress the bag without decomposing or damaging the product. Then the sealing jaws 73, 73 are activated and the bag is sealed.

In an alternative embodiment (not shown) a chamber with a further set of jaws which surround a pipe arranged to by means of suction exhaust air from the bag, is used. Thereby a so called soft-vacuum can be achieved.

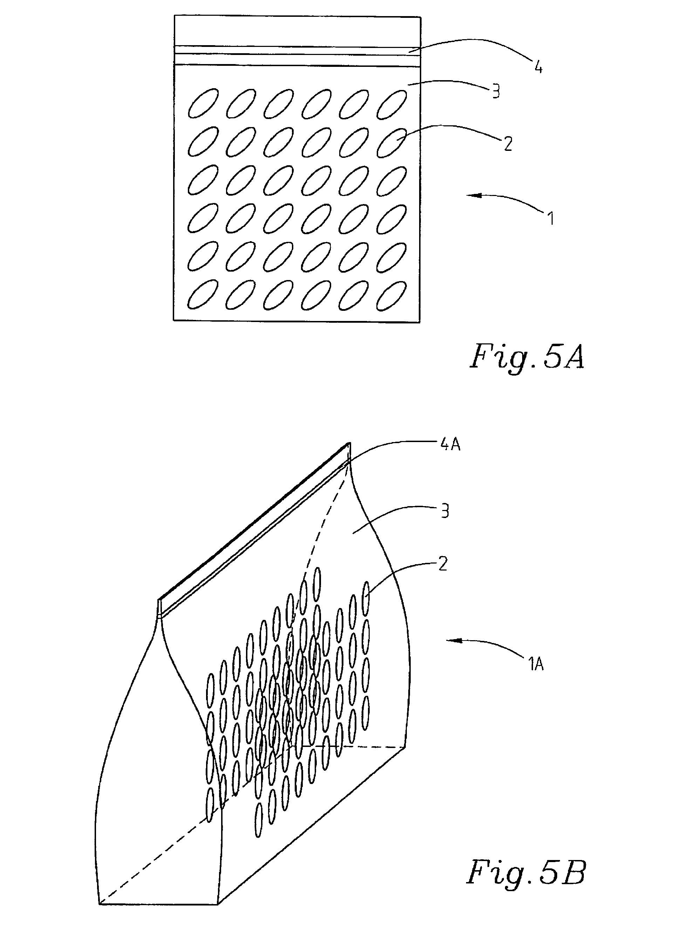

Fig. 5A shows an example of a bag 1 containing a product 2 and a limited amount of liquid 3 and which is sealed by means of a weld 4.
Fig. 5B schematically illustrates a so called standing pouch 1A.

According to a particular embodiment the bag comprises an outer, mechanically resistent layer, for example of PET (polyethylene terephtalate) with a thickness of 10-15 µm, for example 12 µm, (which in the particular embodiment withstands application of welding jaws for sealing purposes). As an alternative for example nylon or OPP (oriented polypropylene) may be used. As an inner water and gas proof barrier layer PE/EOH (polyethylene/ethylenvinylalcohol) may be used, wherein PE acts as an EVOH carrier. Of course there are also in this respect many alternatives, for example aluminium, the most important for this layer being the function as a liquid and a gas barrier.

The invention is of course not limited to the specifically illustrated embodiments, but it can be varied in a number of ways. Many different kinds of food products can be packaged but also other products. The preserving solution may also be of many different kinds, but advantageously it contains the substances discussed above, or similar substances in a required concentration. Forms and dimensions of the packaging bags may also vary considerably and only two examples are here illustrated, but a number of different sizes are of course possible (for example for private comsumption or for large scale kitchen usage), as well as different shapes of the bag which can be substantially symmetric, rectangular, in the form of a cylinder, be wider upwards and narrower at the bottom end or vice versa; a plurality of alternatives are of course possible. Also in other respects the invention can be varied within the scope of the appended claims. Particularly the pre-storing time period is not limited upwards to six to seven days, but it can also be somewhat longer, however normally not more than 10-14 days.

## Claims

1. Method for packaging and a preserving a food product in a liquid containing one or more preservative substances, for example a brine or a liquor, comprising the step of:
- bringing the food product and the liquid together by feeding the food product to the liquid or vice versa;
**characterized in**
**that** it further comprises the steps of:
- pre-storing, in a pre-storing step, the food product in the liquid during a given time period being at least two days and not more than 10-14 days;
- separating, in a separating step, the food product from at least the major part of the liquid containing the preservative substance(s);
- arranging, in a storing step, food product by placing a given, desired, amount of food product in a package comprising a flexible bag or similar;
- verifying that the bag also contains a small amount of storing liquid comprising the liquid containing the one or more preservative substance and/or added new liquid with the same kind and concentration of preservative substance(s) as said preserving liquid or of another kind and concentration, the weight and volume of which is considerably lower and smaller than the given amount of food product;
- removing, in an air removing step, air from the package so that it becomes substantially free from air by mechanical compression of the bag or by evacuation of air corresponding to soft vacuumation;
- sealing the bag package.

2. Method according to claim 1,
**characterized in**
**that** the pre-storing step comprises pre-storing the food product in the liquid contaning the one or more preservative substances during 2-8 days, preferably during 3-6 days, most preferably during 3-5 days.

3. Method according to claim 1 or 2,
**characterize**d **in**
that the separating step comprises;
- sieving off the liquid, and in that the placing step comprises:
- adding liquid only if the amount of not sieved off liquid falls below a given lowest level.

4. Method according to claim 1 or 2,
**characterized in**
**that** the separating step comprises:
- removing, for example pouring out, sieving off or similar, liquid, or fetching the food product out of the liquid;
and in that the storing step comprises:
- adding new liquid to the food product which is of the same kind and concentration of preservative substance(s) as said preserving liquid or of another kind and concentration.

5. Method according to any one of claims 1-4,
**characterized in**
**that** the air removing step comprises:
- vacuumation or partly evacuation, by means of a pump or of an evacuating machine or similar for obtaining a so called soft vacuum, to a vacuum level of 6-60%, preferably of 8-18%, particularly about 10%.

6. Method according to any one of claims 1-4,
**characterized in**
**that** the air removing step comprises:
- bringing pressing means, for example sponges, resilient contact means or similar, arranged on jaws, into contact with the bag package,
- activation of the pressing means to exert a pressure on the bag by means of the pressure exerted by said jaws or similar, wherein said pressure is so selected that the product in the bag is not deformed, changed in its appearance or destroyed.

7. Method according to claim 6,
**characterized in**
**that** the air removing step comprises, after application and activation of the pressing means,
- removing remaining oxygen by introduction of a gas for food preservation to replace the oxygen or by evacuation of air via pipes or similar.

8. Method according to any one of the preceding claims,
**characterized in**
**that** the storing step comprises:
- addition of or verification that the amount of storing liquid at least is 140-200 ml liquid per kilogram of product, preferably 160-170 ml liquid per kilogram of product.

9. Method according to any one of the preceding claims,
**characterized in**
**that** the food product comprises peeled shellfish, for example shrimps, crawfish, mussles or similar.

10. Method according to any one of claims 1-9,
**characterized in**
**that** the brine comprises water and/or oil, salt and one or more preservatives comprising citric acid, sodium benzoate, potassium sorbate, for example about 10 kilograms of preserving substance per 100 liters of liquid.

11. Method according to any one of the preceding claims,
**characterized in**
**that** it comprises the steps of, before the step of bringing together, wherein the food product is frozen:
- thawing the frozen food product;
- pre-processing, for example peeling, washing, rinsing the product.

12. Method according to any one of the preceding claims,
**characterized in**
**that** the package is a bag with an opening, and in that the sealing step comprises welding together the bag opening.

13. A package with a food product obtained by means of the method according any one of claims 1-12.

14. A package according to claim 13,
**characterized in**
**that** the bag comprises a conventional bag with a volume of about 1-5 liters, a standing pouch or a resealable bag.

## Patentansprüche

1. Verfahren zum Verpacken und Konservieren eines Nahrungsmittelprodukts in einer Flüssigkeit, die eine oder mehrere Konservierungssubstanzen aufweist, zum Beispiel eine Lauge oder einen Alkohol, welches die Schritte umfasst:
- Zusammenführen des Nahrungsmittelprodukts und der Flüssigkeit, indem der Flüssigkeit das Nahrungsmittelprodukt zugeführt wird, oder umgekehrt; **dadurch gekennzeichnet, dass**
es ferner die Schritte umfasst:
- in einem Vorlagerungsschritt Vorlagern des Nahrungsmittelprodukts in der Flüssigkeit während einer vorgegebenen Zeitspanne, die mindestens zwei Tage und nicht mehr als 10-14 Tage beträgt;
- in einem Trennschritt Trennen des Nahrungsmittelprodukts von zumindest dem Großteil der Flüssigkeit mit den Konservierungsmittel(n);
- in einem Lagerungsschritt Anordnen von Nahrungsmittelprodukt durch Platzieren von einer vorgegebenen, gewünschten Menge von Nahrungsmittelprodukt in einer Packung, die eine flexible Tasche oder dergleichen aufweist;
- Verifizieren, dass die Tasche auch eine kleine Menge an Lagerflüssigkeit enthält, welche die Flüssigkeit mit der einen oder mehreren Konservierungssubstanzen aufweist und/oder hinzugefügte neue Flüssigkeit mit derselben Art und Konzentration an Konservierungssubstanz(en) wie die Konservierungssubstanz oder eine andere Art und Konzentration, deren Gewicht und Volumen maßgeblich niedriger und kleiner ist als die gegebene Menge des Nahrungsmittelprodukts;
- in einem Luftbeseitigungsschritt Beseitigen von Luft aus der Packung, so dass diese im Wesentlichen frei von Luft wird, mittels mechanischer Kompression der Tasche oder Entleeren der Luft, was weichem Vakuumieren entspricht;
- Abdichten der Taschenpackung.

2. Verfahren nach Anspruch 1,
**dadurch gekennzeichnet, dass** der Vorlagerungsschritt das Vorlagern des Nahrungsmittelprodukts in der Flüssigkeit mit der einen oder mehreren Konservierungssubstanzen während 2-8 Tagen, bevorzugt während 3-6 Tagen und besonders bevorzugt während 3-5 Tagen umfasst.

3. Verfahren nach Anspruch 1 oder 2,
**dadurch gekennzeichnet, dass**
der Trennschritt umfasst;
- Aussieben der Flüssigkeit, und dadurch, dass der Anordnungsschritt umfasst:
- nur dann Hinzufügen von Flüssigkeit, wenn die Menge an nicht ausgesiebter Flüssigkeit unter einen vorgegebenen untersten Pegel fällt.

4. Verfahren nach Anspruch 1 oder 2,
**dadurch gekennzeichnet, dass**
der Trennschritt umfasst:
- Entfernen, beispielsweise Ausschütten, Aussieben oder dergleichen, der Flüssigkeit oder Herausholen des Nahrungsmittelprodukts aus der Flüssigkeit;
und dadurch, dass der Lagerungsschritt umfasst:
- Hinzufügen von neuer Flüssigkeit zu dem Nahrungsmittelprodukt, die dieselben Art und Konzentration von Konservierungssubstanz(en) wie die Konservierungsflüssigkeit oder eine andere Art und Konzentration aufweist.

5. Verfahren nach einem der Ansprüche 1-4,
**dadurch gekennzeichnet, dass**
der Luftbeseitigungsschritt umfasst:
- Vakuumieren oder partielles Beseitigen, mittels einer Pumpe oder einer Beseitigungsmaschine oder dergleichen, zum Erzeugen eines sogenannten weichen Vakuums, zu einem Vakuumpegel von 6-60%, vorzugsweise 18%, insbesondere ungefähr 10%.

6. Verfahren nach einem der Ansprüche 1-4,
**dadurch gekennzeichnet, dass**
der Luftbeseitigungsschritt umfasst:
- in Kontakt bringen von Pressmitteln, beispielsweise Schwämmen, elastischen Kontaktmitteln oder dergleichen, die auf Einspannbacken angeordnet sind, mit der Taschenpackung,
- Aktivieren der Pressmittel, um einen Druck auf die Tasche auszuüben mittels des Drucks, der durch die Einspannbacken oder dergleichen ausgeübt wird, wobei der Druck so ausgewählt ist, dass das Produkt in der Tasche nicht deformiert, in seiner Erscheinung verändert oder zerstört wird.

7. Verfahren nach Anspruch 6,
**dadurch gekennzeichnet, dass**
der Luftbeseitigungsschritt nach dem Anwenden und Aktivieren der Pressmittel umfasst:
- Beseitigen von restlichem Sauerstoff durch Einführen eines Gases für Nahrungskonservierung zum Ersetzen des Sauerstoffs oder durch Entleeren von Luft durch Leitungen oder dergleichen.

8. Verfahren nach einem der vorstehenden Ansprüche,
**dadurch gekennzeichnet, dass**
der Lagerungsschritt umfasst:
- Hinzufügen von oder Verifizieren, dass die Menge an Lagerflüssigkeit mindestens 140-200 ml Flüssigkeit pro Kilogramm des Produkts, vorzugsweise 160-170 ml Flüssigkeit pro Kilogramm des Produkts beträgt.

9. Verfahren nach einem der vorstehenden Ansprüche,
**dadurch gekennzeichnet, dass**
das Nahrungsmittelprodukt geschältes Krustentier, beispielweise Garnelen, Flusskrebs, Muscheln oder dergleichen enthält.

10. Verfahren nach einem der Ansprüche 1-9,
**dadurch gekennzeichnet, dass**
die Lauge Wasser und/oder Öl, Salz und ein oder mehrere Konservierungsmittel mit Zitronensäure, Natriumbenzoat, Kalium, Sorbat, beispielsweise ungefähr 10 Kilogramm Konservierungssubstanz pro 100 Liter an Flüssigkeit enthält.

11. Verfahren nach einem der vorstehenden Ansprüche,
**dadurch gekennzeichnet, dass**
es vor den Schritten des Zusammenführens, die Schritte umfasst, wobei das Nahrungsmittelprodukt gefroren ist:
- Auftauen des gefrorenen Nahrungsmittelprodukts;
- Vorbehandeln, beispielsweise Schälen, Waschen, Spülen des Produkts.

12. Verfahren nach einem der vorstehenden Ansprüche,
**dadurch gekennzeichnet, dass**
die Verpackung eine Tasche mit einer Öffnung ist, und dass der Abdichtungsschritt das Zusammenschweißen der Taschenöffnung umfasst.

13. Verpackung mit einem Nahrungsmittelprodukt, die mittels des Verfahrens nach einem der Ansprüche 1-12 hergestellt worden ist.

14. Verpackung nach Anspruch 13,
**dadurch gekennzeichnet, dass**
die Tasche eine konventionelle Tasche mit einem Volumen von 1-5 Liter, ein Standbeutel oder eine lösbare Tasche ist.

## Revendications

1. Procédé pour l'emballage et la conservation d'un produit alimentaire dans un liquide renfermant une ou plusieurs substances de conservation, par exemple une saumure ou un jus, comprenant l'étape consistant à :
- rassembler le produit alimentaire et le liquide en distribuant le liquide dans le produit alimentaire ou inversement ;
ledit procédé étant **caractérisé en ce qu'**il comprend, en outre, les étapes consistant à :
- pré-stocker, au cours d'une étape de pré-stockage, le produit alimentaire dans le liquide pendant une durée déterminée étant au moins égale à deux jours et n'étant pas supérieure à 10-14 jours ;
- séparer, au cours d'une étape de séparation, le produit alimentaire d'au moins la majeure partie du liquide renfermant la ou les substances de conservation ;
- agencer, au cours d'une étape de stockage, le produit alimentaire en disposant une quantité donnée, souhaitée, de produit alimentaire dans un emballage comprenant une poche souple ou analogue ;
- vérifier que la poche contient également une petite quantité de liquide de stockage comprenant le liquide renfermant la ou les substances de conservation et/ou un nouveau liquide ajouté renfermant une ou des substances de conservation du même type et en la même concentration que celles dudit liquide de conservation ou d'un autre type et en une autre concentration, le poids et le volume du liquide étant considérablement inférieurs à la quantité donnée de produit alimentaire ;
- éliminer, au cours d'une étape d'élimination d'air, l'air de l'emballage de manière que l'emballage soit sensiblement dépourvu d'air par compression mécanique de la poche ou par évacuation d'air correspondant à une douce création de vide ;
- fermer hermétiquement l'emballage formant poche.

2. Procédé selon la revendication 1, **caractérisé en ce que** l'étape de pré-stockage comprend le pré-stockage du produit alimentaire dans le liquide renfermant la ou les substances de conservation pendant 2 à 8 jours, de préférence 3 à 6 jours, mieux 3 à 5 jours.

3. Procédé selon la revendication 1 ou 2, **caractérisé en ce que** l'étape de séparation comprend l'étape consistant à :
- passer le liquide à la passoire, et **en ce que** l'étape de disposition comprend l'étape consistant à :
- ajouter du liquide uniquement si la quantité de liquide non passé à la passoire chute en dessous d'un niveau minimum donné.

4. Procédé selon la revendication 1 ou 2, **caractérisé en ce que** l'étape de séparation comprend l'étape consistant à :
- enlever le liquide, par exemple le déverser, le passer à la passoire, ou analogue, ou prélever le produit alimentaire du liquide ;
et **en ce que** l'étape de stockage comprend l'étape consistant à :
- ajouter du nouveau liquide dans le produit alimentaire renfermant une ou des substances de conservation du même type et en la même concentration que celles dudit liquide de conservation, ou d'un autre type et en une autre concentration.

5. Procédé selon l'une quelconque des revendications 1 à 4, **caractérisé en ce que** l'étape d'élimination de l'air comprend l'étape consistant à :
- créer un vide ou une évacuation partielle, au moyen d'une pompe ou d'une machine d'évacuation, ou analogue, pour obtenir un vide dit doux, jusqu'à un niveau de vide de 6 à 60 %, de préférence de 8 à 18 %, en particulier d'environ 10 %.

6. Procédé selon l'une quelconque des revendications 1 à 4, **caractérisé en ce que** l'étape d'élimination de l'air comprend les étapes consistant à :
- amener un moyen de pressage, par exemple des éponges, un moyen de contact élastique, ou similaire, en contact avec l'emballage formant poche,
- actionner le moyen de pressage pour exercer une pression sur la poche au moyen de la pression exercée par lesdites mâchoires, ou similaires, ladite pression étant sélectionnée de façon que le produit dans la poche ne soit pas déformé, modifié d'aspect ou détruit.

7. Procédé selon la revendication 6, **caractérisé en ce que** l'étape d'élimination de l'air comprend, après application et actionnement du moyen de pressage, l'étape consistant à :
- éliminer l'oxygène restant par introduction d'un gaz de conservation des aliments pour remplacer l'oxygène ou par évacuation d'air via des conduits, ou analogues.

8. Procédé selon l'une quelconque des revendications précédentes, **caractérisé en ce que** l'étape de stockage comprend l'étape consistant à :
- ajouter du liquide ou vérifier que la quantité de liquide de stockage est au moins de 140 à 200 ml par kilogramme de produit, de préférence de 160 à 170 ml de liquide par kilogramme de produit.

9. Procédé selon l'une quelconque des revendications précédentes, **caractérisé en ce que** le produit alimentaire consiste en des fruits de mer décortiqués, tels que des crevettes, des langoustines, des moules ou analogues.

10. Procédé selon l'une quelconque des revendications 1 à 9, **caractérisé en ce que** la saumure comprend de l'eau et/ou de l'huile, du sel et un ou plusieurs conservateurs comprenant l'acide citrique, le benzoate de sodium, le sorbate de potassium, par exemple environ 10 kilogrammes de substance de conservation pour 100 litres de liquide.

11. Procédé selon l'une quelconque des revendications précédentes, **caractérisé en ce qu'**il comprend, avant l'étape de rassemblement du produit alimentaire et du liquide, le produit alimentaire étant congelé, les étapes consistant à :
- faire dégeler le produit alimentaire congelé ;
- pré-transformer le produit, par exemple par décorticage, lavage, rinçage.

12. Procédé selon l'une quelconque des revendications précédentes, **caractérisé en ce que** l'emballage est une poche dotée d'une ouverture, et **en ce que** l'étape de fermeture hermétique comprend le soudage de l'ouverture de la poche.

13. Emballage avec produit alimentaire obtenu au moyen du procédé selon l'une quelconque des revendications 1 à 12.

14. Emballage selon la revendication 13, **caractérisé en ce que** la poche consiste en une poche classique ayant un volume d'environ 1 à 5 litres, un sachet à maintien vertical ou une poche refermable.
